Europäisches Patentamt

(19) European Patent Office

Office européen des brevets

(11) Publication number: **0 358 328**

**A1**

(12) # EUROPEAN PATENT APPLICATION

(21) Application number: 89307972.3

(22) Date of filing: 04.08.89

(51) Int. Cl.5: **C08G 18/12 , C08G 18/40 , //(C08G18/12,101:00)**

(30) Priority: 19.08.88 GB 8819759

(43) Date of publication of application:
14.03.90 Bulletin 90/11

(84) Designated Contracting States:
AT BE CH DE ES FR GB GR IT LI NL SE

(71) Applicant: IMPERIAL CHEMICAL INDUSTRIES PLC
Imperial Chemical House Millbank
London SW1P 3JF(GB)

(72) Inventor: Phanopoulos, Christopher
Chemin des Deux Maisons 67/17
B-1200 Brussel(BE)
Inventor: Limerkens, Dominicus
Peerderbaan 3
B-3578 Meeuwen-Gruitrode(BE)
Inventor: Bagaglio, Guan-Carlo
Via Londonio 2
I-21100 Varese(IT)
Inventor: Stilling, Heinz
Avenue Ciceron 25
B-1140 Brussel(BE)

(74) Representative: Leherte, Georges Maurice Lucien Marie et al
Imperial Chemical Industries PLC Legal
Department: Patents P.O. Box 6 Bessemer Road
Welwyn Garden City Herts. AL7 1HD(GB)

(54) Novel isocyanate-prepolymer compositions.

(57) Isocyanate composition comprising 10-90 pbw of polyester based isocyanate prepolymer having a functionality of 2.0-2.3 and made from a polyester polyol having a molecular weight of 1,000-10,000 and 10-90 pbw of polyether based isocyanate prepolymer having a functionality of 2.0-2.3 and made from a polyether polyol having a molecular weight of 1,000-10,000 and an ethylene oxide content of 3-50% weight, the free NCO value of the prepolymer composition being 8-25%; the amounts of polyether prepolymer and polyester prepolymer being calculated from the total amount of polyether prepolymer and polyester prepolymer in the composition.

## Novel isocyanate compositions

The present invention is concerned with novel isocyanate compositions comprising isocyanate prepolymers, processes for preparing these compositions, polyurethanes made from these compositions and processes for preparing such polyurethanes.

Isocyanate prepolymers in polyurethane technology are known. USP 4 182 898 discloses such prepolymers. It has been stated in said patent that it is accepted by manufacturers of prepolymers and end-use fabricators that polyester prepolymers and polyether prepolymers are generally incompatible and cannot be used in combination.

Surprisingly a combination of a specific class of polyester prepolymers and a specific class of polyether prepolymers has been found which are excellently compatible and which are very useful for preparing polyurethanes, especially of the microcellular elastomeric type.

Very low density microcellular elastomers may be prepared from these prepolymer compositions exhibiting physical properties which are obtained with conventional microcellular elastomers at much higher density.

Consequently the present invention is concerned with an isocyanate composition comprising 10-90 parts by weight (pbw) of a polyester based isocyanate prepolymer having a functionality of 2.0-2.3 and made from a polyester polyol having a molecular weight of 1,000-10,000, and 10-90 parts by weight of a polyether based isocyanate prepolymer having a functionality of 2.0-2.3 and made from a polyether polyol having a molecular weight of 1,000-10,000, and an ethylene oxide content of 3-50% weight, the free NCO value of the prepolymer composition being 8-25%; the amounts of polyether prepolymer and polyester prepolymer being calculated from the total amount of polyether prepolymer and polyester prepolymer in the composition.

The term "prepolymer" in the present patent application is to be construed as the reaction product of a polyol and a polyisocyanate having no or virtually no free hydroxyl groups. Prepolymers of this type are prepared by reacting polyisocyanate and polyol in such relative amounts that no or virtually no free hydroxyl groups are obtained in the prepolymer. This relative amount, expressed as the amount of NCO groups per OH group present in the reaction mixture is at least 2. If this relative amount is more than 2 free polyisocyanate, i.e. polyisocyanate which did not react with the polyol, may be left. This free polyisocyanate influences the NCO value of the compositions. The term "prepolymer compositions" in the present patent application is to be construed as including free polyisocyanate.

Such free polyisocyanate may have been added to one or both of the prepolymers as well, e.g. for bringing the free NCO value of the prepolymer composition at a level as indicated hereinbefore.

Preferably the molecular weight of the polyester and the polyether polyol is 1,000-3,000 and 1,000-6,000 respectively. The free NCO value of the prepolymer composition is preferably 10-23%. A preferred range for the functionality of both prepolymers is 2.0-2.1. The ethylene oxide (EO) content in the polyether polyol preferably is 4-25% weight and more preferably 5-15% weight.

The prepolymers are prepared by reacting a polyester polyol or polyether polyol with polyisocyanates in conventional ways, like described in USP 4 182 898, USP 4 647 596 and East German Patent 237 758. The polyester polyols used are based on aliphatic, cycloaliphatic or aromatic di-carboxylic acids and aliphatic, cycloaliphatic or aromatic diols.

Examples of di-carboxylic acids are adipic acid, glutaric acid, terephthalic acid, succinic acid, phthalic acid and isophthalic acid and mixtures thereof.

Examples of diols are ethylene glycol, propylene glycol, 1,4-butane diol, 1,6-hexane diol, diethylene glycol and dipropylene glycol and mixtures thereof.

The polyether polyols used are prepared from a polyol, preferably a diol, like those mentioned before, and ethylene oxide and another alkylene oxide or other alkylene oxides, preferably from a diol, ethylene oxide and propylene oxide. The polyether polyols may be random copolymers or EO-tipped. Preferably they are EO-tipped.

The polyisocyanate used may be any organic polyisocyanate compound or mixture of polyisocyanate compounds, provided said compounds have at least 2 isocyanate groups and the functionality of the total polyisocyanate composition is 2.0-2.3 and preferably 2.0-2.1.

Examples of organic polyisocyanates which may be used in the process of the invention include aliphatic isocyanates such as hexamethylene diisocyanate, aromatic isocyanates such as meta-and para-phenylene diisocyanate, tolylene-2,4- and 2,6-diisocyanates, diphenylmethane-4,4'-diisocyanate, chlorophenylene-2,4-diisocyanate, naphtylene-1,5-diisocyanate, diphenylene 4,4'-diisocyanate, 4,4'-diisocyanate-3,3'-dimethyldiphenyl, 3-methyldiphenylmethane-4,4'-diisocyanate and diphenyl ether diisocyanate, cycloaliphatic diisocyanates such as cyclohexane -2,4-and 2,3-diisocyanates, 1-methyl cyclohexyl-2,4- and 2,6-diisocyanates and mixtures thereof and bis- (isocyanatocyclohexyl-)methane and tri-isocyanates such as 2,4,6-triisocyanatotoluene and 2,4,4-triisocyanatodiphenylether.

Mixtures of isocyanates may be used, for example a mixture of tolylene diisocyanate isomers such as the commercially available mixtures of 2,4- and 2,6-isomers and also the mixture of di- and higher poly-isocyanates produced by phosgenation of aniline/formaldehyde condensates. Such mixtures are well-known in the art and include the crude phosgenation products containing mixtures of methylene bridged polyphenyl polyisocyanates, including diisocyanate, triisocyanate and higher poly-isocyanates together with any phosgenation by-products.

Preferred isocyanates to be used in the present invention are those wherein the isocyanate is an aromatic diisocyanate or polyisocyanate of higher functionality such as a pure diphenylmethane diisocyanate or crude mixtures of methylene bridged polyphenyl polyisocyanates containing diisocyanates, triisocyanate and higher functionality polyisocyanates. Most preference is given to pure diphenyl methane diisocyanate and especially to diphenyl methane-4,4'-diisocyanate.

The compositions according to the present invention may be prepared by reacting the polyisocyanate with a mixture of the polyether polyol and the polyester polyol or sequentially with the polyether polyol and the polyester polyol in both orders. Preferably the compositions according to the present invention are prepared by combining a polyester prepolymer and a polyether prepolymer which have been made separately.

The advantage of this last method is that no compatibility of the polyester polyol and the polyether polyol is required, only the polyester prepolymer and the polyether prepolymer should be compatible, and that no by-products are formed which influence the properties of the composition according to the invention in a negative way, like polymers comprising both a polyester and a polyether part. The combination of the polyester prepolymer and the polyether prepolymer is generally conducted at ambient pressure and a temperature between 10 and 80° C, preferably followed by intimately mixing.

The amount of polyester based isocyanate prepolymer and polyether based isocyanate prepolymer in the composition according to the present invention preferably is 30-70 pbw and 30-70 pbw respectively, and more preferably 40-60 pbw and 40-60 pbw respectively, calculated from the total amount of polyester based prepolymer and polyether based prepolymer in the composition.

The composition further may comprise conventional additives like catalysts, blowing agents, surfactants, colorants, stabilisers and fillers.

The isocyanate compositions according to the present invention comprise polyester based prepolymers compatible with the polyether based prepolymers. These compositions can be used for preparing polyurethanes upon reaction with a polyol. Especially microcellular elastomers, widely used for shoe soling, made from these isocyanate compositions exhibit excellent properties.

Elastomers, compact and (micro)cellular, can be prepared having a density of 0.1-1.2 g/cm$^3$. Those microcellular elastomers having a very low density, i.e. 0.4 or lower, appeared to show physical properties which only can be obtained with conventional microcellular elastomers having a higher density. The isocyanate compositions according to the present invention may further be used for preparing flexible polyurethane foams.

The polyols, catalysts, blowing agents and other ingredients used for preparing the flexible polyurethane foams and the (microcellular) elastomers may be selected among those already known for preparing similar products. Likewise the relative amounts of the ingredients and the process conditions are known to those skilled in the art.

The invention is illustrated but not limited by means of the following examples.

Example I

The ingredients used were :
Polyisocyanate 61.25 pbw : consisting of 59.75 pbw of Suprasec MPR and 1.50 pbw of Suprasec DNR (both marketed by Imperial Chemical Industries:
Polyester polyol 19.50 pbw : the polyester polyol had a Mw of 2500 and was based on adipic acid (commercialized by ICI under the name PBA 5074)
Polyether polyol 19.25 pbw : an ethylene oxide tipped polyether polyol of Mw 2150 (commercialized by ICI under the name PBA 5130)
The polyisocyanate was heated to 70° C. Subsequently the polyester polyol was added to the polyisocyanate. Then the reaction was heated to 80° C for 2.0 hours. The polyether prepolymer was prepared the same way.

The polyester prepolymer and the polyether prepolymer were combined (weight ratio 55/45) and blended to a homogeneous composition. The composition had a NCO value of 19%.

Example 2

An elastomer was prepared from 129 pbw of the prepolymer composition prepared according to example 1 and 100 pbw of a polyol composition by providing these to a mould by means of a dispensing machine.

The polyol composition consisted of :
- 85.2 pbw of the polyester polyol of Example 1
- 13.0 pbw of ethylene glycol
- 0.6 pbw of a tertiary amine catalyst commercialized by Air Products as DABCO S
- 0.9 pbw of $H_2O$
- 0.3 pbw of a silicone surfactant commercialized by Dow Corning as DC 193

100 pbw total The process parameters were :

polyol temperature : 40-45 °C ;

prepolymer temperature : 35-40 °C ;

mixing head temperature : 40 °C ;

mould temperature : 50 °C ; and

output : 50 g/second

Example 3 - Comparative

In a similar way an elastomer was prepared from a conventional prepolymer prepared from diphenylmethane-4,4'-diisocyanate and a polyester from ethylene glycol, tetramethylene glycol and adipic acid having MW 2000 ; the NCO value of this prepolymer composition being 19%. The amount of ethylene glycol and water was 10.0 pbw and 0.5 pbw respectively, instead of 13.0 pbw and 0.9 pbw. A stable microcellular elastomer from the same conventional prepolymer and 0.9 pbw of water could not be made due to dimensional instability and shrinkage.

The reaction profile and the properties were as follows :

|  | EXAMPLE 2 | EXAMPLE 3 |
|---|---|---|
| cream time, sec. | 5-7 | 5-7 |
| gel time, sec. | 18-25 | 18-25 |
| tear resistance, sec. | 40-50 | 40-50 |
| free rise density, kg/m$^3$ | 152 | 250 |
| demould time, sec. | 150-200 | 150 |
| min. moulded density, kg/m$^3$ | 250 | 430 |
| moulded density, g/cm$^3$ | 0.30 | 0.43 |
| hardness (shore A) | 55 | 48 |
| tear strength, N/$_{mm}$ | 5.1 | 5.7 |
| elongation to break, % | 350 | 380 |
| tensile strength, N/$_{mm2}$ | 4.0 | 5.0 |
| flex test (% cut growth after 30.000 cycles) | 0 | 50 |

Claims

1. Isocyanate composition comprising 10-90 pbw of polyester based isocyanate prepolymer having a functionality of 2.0-2.3 and made from a polyester polyol having a molecular weight of 1,000-10,000 and 10-90 pbw of polyether based isocyanate prepolymer having a functionality of 2.0-2.3 and made from a polyether polyol having a molecular weight of 1,000-10,000 and an ethylene oxide content of 3-50% weight,

4

the free NCO value of the prepolymer composition being 8-25%; the amounts of polyether prepolymer and polyester prepolymer being calculated from the total amount of polyether prepolymer and polyester prepolymer in the composition.

2. Process for preparing an isocyanate composition according to claim 1, characterised in that the composition is prepared by combining the polyester prepolymer and the polyether prepolymer.

3. Polyurethanes prepared from a composition according to claim 1 and a polyol.

4. Process for preparing a polyurethane according to claim 3, characterised in that a composition according to claim 1 and a polyol are reacted.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 124 572 (C. MAO) * Claim 1; column 2, lines 31-40; column 2, line 46 - column 3, line 2; column 3, lines 48-52 * --- | 1,3,4 | C 08 G 18/12 C 08 G 18/40 // (C 08 G 18/12 C 08 G 101:00 ) |
| X | US-A-4 379 904 (B.S. EHRLICH et al.) * Claims 1-8,11,15-20; column 3, line 65 - column 4, line 5 * --- | 1,3,4 | |
| X | CHEMICAL ABSTRACTS, vol. 82, no. 6, 10th February 1975, page 51, abstract no. 32168v, Columbus, Ohio, US; & JP-A-74 23 598 (MITSBOSHI BELTING LTD) 17-06-1974 * Abstract * --- | 1,3,4 | |
| A | FR-A-2 178 757 (PECHINEY) * Claims 1-3,5-8 * --- | 2 | |
| D,A | US-A-4 182 898 (E.J. FUJIWARA) * Claims 1-3,5,6; column 4, lines 25-36; column 5, lines 44-56 * ----- | 1 | TECHNICAL FIELDS SEARCHED (Int. Cl.5) C 08 G |

The present search report has been drawn up for all claims

| Place of search | Date of completion of the search | Examiner |
|---|---|---|
| THE HAGUE | 04-12-1989 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)